(19) **Europäisches Patentamt / European Patent Office / Office européen des brevets**

(11) **EP 2 312 300 B1**

(12) **EUROPEAN PATENT SPECIFICATION**

(45) Date of publication and mention of the grant of the patent:
**27.03.2013 Bulletin 2013/13**

(21) Application number: **08791464.4**

(22) Date of filing: **23.07.2008**

(51) Int Cl.:
***G01N 21/952*** (2006.01)   ***G01N 21/892*** (2006.01)

(86) International application number:
**PCT/JP2008/063207**

(87) International publication number:
**WO 2010/007693 (21.01.2010 Gazette 2010/03)**

(54) **WIRE SURFACE INSPECTION DEVICE**

DRAHTOBERFLÄCHENINSPEKTIONSVORRICHTUNG

DISPOSITIF D'INSPECTION DE LA SURFACE D'UN FIL METALLIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.07.2008 JP 2008185296**

(43) Date of publication of application:
**20.04.2011 Bulletin 2011/16**

(73) Proprietor: **The Furukawa Electric Co., Ltd.
Chiyoda-ku
Tokyo 100-8322 (JP)**

(72) Inventors:
- **KATO, Koji**
  **Tokyo 100-8322 (JP)**
- **HAYASHI, Hiroshi**
  **Tokyo 100-8322 (JP)**
- **SHIGEMATSU, Takashi**
  **Tokyo 100-8322 (JP)**

- **NAKAMURA, Kenichi**
  **Tokyo 100-8322 (JP)**
- **ISHIDA, Tomohiro**
  **Tokyo 100-8322 (JP)**
- **TANIGUCHI, Kenji**
  **Ichihara-shi**
  **Chiba 290-8555 (JP)**
- **FURUTA, Shigeyuki**
  **Tokyo 100-8322 (JP)**

(74) Representative: **Horn Kleimann Waitzhofer
Elsenheimerstrasse 65
80687 München (DE)**

(56) References cited:
EP-A1- 1 879 019   JP-A- 1 112 143
JP-A- 6 331 557   JP-A- 9 292 305
JP-A- 10 068 700   JP-A- 54 079 693
JP-A- 55 009 170   JP-T- 2006 510 876
JP-U- 49 013 688   US-A- 4 659 937
US-B1- 6 597 455

## Description

### TECHNICAL FIELD

The present invention relates to a defect inspection device which inspects various types of defects such as stain and unevenness of the surface of a wire member, and more particularly, to a wire surface inspection device which inspects defects existing on the surface of a wire member provided with a coating layer such as an insulating layer thereon.

### BACKGROUND ART

Concomitantly with an increasing export of wire elements such as multi-layered insulated cable for use in transformers or the like incorporated in mobile phones or game machines, visual inspection on the appearance of the wire elements has been strictly performed by customers. Recently, there is a demand on that infinitesimal stain or scar is strictly checked. As a wire surface inspection device which inspects unevenness or scars of the surface of a wire element, there has been disclosed a device with a plurality of light projectors that is disposed around a wire element so as to illuminate the wire element in the slanted direction with respect to the central axis line of the wire element, in order to detect defects on a peripheral portion of the wire element (refer to Patent Document 1). There has been also disclosed a wire surface inspection device with two laser sources that are allowed to illuminate the entire circumference of the wire element with inspecting light, without dead angles (refer to Patent Document 2).

Patent Document 1: Japanese Utility Model Application Laid-Open (JU-A) No. 49-013688
Patent Document 2: Japanese Patent Application Laid-Open (JP-A) No. 10-68700

JP-9292305 discloses an apparatus including a configuration where parallel rays are projected from the direction intersecting a moving optical fiber. Scattered light from the optical fiber is received with image sensors. These image sensors are arranged so as to have a light-receiving angle &theta from the position, squarely facing a light projecting axis 3a of the parallel rays. The outputs of these image sensors are processed in a signal processing part, and the distribution pattern of the scattered light intensity is obtained. The activity defects in the optical fiber are judged by a judging part based on the distribution pattern of the scattered light intensity.
In JP-54079693 a device capable of detecting defects without being influenced by linear velocity or linear vibration, by receiving the light reflected from a defective part on wire body surface after being projected from one optical fiber with the other optical fiber is disclosed. In this device projected light from an end part of an outer layer optical fiber runs along an optical path and is reflected by a concave mirror, then runs along an optical path and is reflected by the surface of a wire body, thereby advancing at the reflection is equal to the incident angle. If there is a defect in the wire body surface, the light running along the optical path is reflected from the surface of the defective part, returns along an optical path, and is reflected by the concave mirror, thereby entering the end part of the inner layer optical fiber through the optical path, finally reaching a photo detector.

### DISCLOSURE OF THE INVENTION

### PROBLEMS TO BE SOLVED BY THE INVENTION

However, in the technologies disclosed in Patent Documents 1 and 2, since the defect of the wire element is detected by using the scattered light generated from light reflection, it is difficult to detect stain or black points on the surface of the wire element.
In addition, due to the vibration of an inspection target wire in the width direction (the direction perpendicular to the axial direction), there occurs a phenomenon where the inspecting light illuminated onto a peripheral portion of the inspection target wire subtly collides with the wire element or not. Therefore, since the reflected light incident onto the light receiving element greatly varies, the vibration in the width direction results in erroneous detection.
The present invention is made in view of the problems in the related art and is to provide a wire surface inspection device capable of accurately detecting a defect such as a scar (a bump, a cut, a foam, or the like), a stain, or discoloration of the surface of a wire element (hereinafter, referred to as a " wire") which is formed to extend in a wire shape by preventing erroneous detection attributable to the vibration of the inspection target wire.

### MEANS FOR SOLVING THE PROBLEMS

The problems are solved by an inspection device according to claim 1. In the present invention, a plurality of light receiving elements is symmetrically disposed in the width direction of an inspection target wire, and vibration components in the width direction of the inspection target wire can be offset by a process of calculating output signals from the light receiving elements that are symmetrically disposed.
According to a first aspect, there is provided a wire surface inspection device including: a light source which outputs inspecting light onto the surface of an inspection target wire; an optical processing portion which allows the inspecting light output from the light source to illuminate the surface of the inspection target wire; a light receiving portion where at least two light receiving elements which receive reflected light of the inspecting light from the inspection target wire are disposed around the inspection target wire at substantially symmetric positions with respect to a central axis of the inspection target wire and a plane having the central axis of the inspection target wire thereon; and a defect detection portion which performs a calculation process on output signals of the symmetrically-disposed light receiving elements and detects a defect of the surface of the inspection target wire based on the calculated result of the output signals.

In the aspect, the vibration noise is removed from the output signal by performing calculation (for example, addition, subtraction, differentiation, integration, or the like) on the output signals of the light receiving elements which are symmetrically disposed in the width direction of the inspection target wire, so that it is possible to prevent the erroneous detection attributable to the vibration of the inspection target wire in the width direction. Furthermore, since there is no likelihood that the reflected light comes to deviate from the wire due to the vibration, the longitudinal direction component of the vibration (long-side direction vibration component) of the inspection target wire is not substantially influenced from the vibration. Therefore, the longitudinal direction component of the vibration of the inspection target wire can be neglected.

According to a second aspect, in the wire surface inspection device according to the first aspect, n sets of inspection units, each set including the light source, the optical processing portion, and the light receiving portion, are disposed at an interval of equally n-divided angles of the circumference of the inspection target wire (n is an integer equal to two or more).

In the aspect, plural inspection unit sets are disposed to surround the inspection target wire. When one set of inspection units is used, there is a limitation in the inspection range by the inspecting light which can be illuminated from the light source. Therefore, the plural inspection units are disposed to surround the inspection target wire, so that the entire surface of the inspection target wire can be inspected. For example, in the case where the entire angle is divided into four angle ranges, if each inspection unit securely covers the angle of 90° (+45°), the detection can be achieved over the entire angle range of 360°.

If the coverage range of one set of inspection units is 90°, very accurate detection can be obtained. For example, if the defect is located at the position shifted by ±60° from the front position of the light source (laser) (that is, the position of the end portion in the case where the sensors are disposed at the interval of 120°), the change amount of the reflected light decreases at the end portion, so that it is difficult to detect the defect. However, according to this aspect, if the defect is located at the position shifted by about ±45° (that is, at the position of the end portion in the case where the sensors are disposed at the interval of 90°), the change amount of the reflected light also increases, so that it is possible to detect the defect with high accuracy.

According to a third aspect,, in the wire surface inspection device according to the first or second aspect, the optical processing portion shapes the inspecting light into a thin slit shape by concentrating the focal point of the inspecting light output from the light source so that the short axis thereof is aligned with the longitudinal direction of the inspection target wire and allows the inspecting light to illuminate the inspection target wire.

In the aspect, the inspecting light is shaped into a thin slit shape by concentrating the focal point of the inspecting light in the longitudinal direction of the inspection target wire. In this manner, the resolution in the longitudinal direction of the inspection target wire can be increased by concentrating the short axis of the inspecting light into a thin slit shape, so that it is possible to detect the defect (discoloration, a stain, a scar, or the like) which is small in size in the longitudinal direction.

According to a fourth aspect, in the wire surface inspection device according to any one of the first to third aspects, the optical processing portion includes: a cylindrical convex lens which concentrates a focal point of the inspecting light in the short axis direction; a cylindrical concave lens which converts the concentrated inspecting light into a parallel light; and a light condensing lens which further concentrates the focal point of the parallel light-converted inspecting light in the short axis direction and allows the inspecting light as a slit-shaped spot light to illuminate the inspection target wire.

According to the aspect, since parallel light or nearly-parallel light is illuminated as the inspecting light, the reflected light does not spread and the entire reflected light can be received by the light receiving sensor even though the light receiving sensor has a small size. Therefore, the light reception sensitivity improves. In addition, after the ellipse parallel light is formed one time, the concentration is performed and the light can be concentrated into the thinner slit-shaped beam.

In other words, according to the aspect, it is possible to further concentrate the focal point in the short axis direction (longitudinal direction of the inspection target wire) of the inspecting light while suppressing the spreading of the inspecting light. Finally, the length in the short axis direction of the inspecting light can be decreased to several hundreds micrometers, for example, to about 100 to 150 micrometers. In this manner, by reducing the length of the inspecting light to about 100 to 150 micrometers, it is possible to detect infinitesimal defects having the order of 100 micrometers.

According to a fifth aspect, in the wire surface inspection device according to any one of the first to fourth aspects, the optical processing portion performs a shaping process of shaping the inspecting light into a substantial elliptic shape having a long axis in a short side direction of the inspection target wire.

According to a sixth aspect, in the wire surface inspection device according to any one of the first to fifth aspects, the signal processing portion adds the output signals of at least the two light receiving elements.

In the aspect, the vibration noise is removed from the output signal by offsetting the vibration components in the width direction by adding the output signals of the light receiving elements which are symmetrically disposed in the width direction of the inspection target wire, so that it is possible to prevent the erroneous detection attributable to the vibration in the width direction of the inspection target wire. Furthermore, since the reflected light does not deviate from the wire due to the vibration, the longitudinal direction component of the vibration (longitudinal direction vibration component) of the inspection target wire is not substantially influenced from the vibration. Therefore, the longitudinal direction component of the vibration of the inspection target wire can be neglected.

According to a seventh aspect, in the wire surface inspection device according to any one of the first to fifth aspects, a ratio of the long diameter and the short diameter of the substantial elliptic shape is 30 or more.

EFFECTS OF THE INVENTION

In the wire surface inspection device according to the firth aspect, the vibration noise is removed from the output signal by performing calculation (for example, addition, subtraction, differentiation, integration, or the like) on the output signals of the light receiving elements which are symmetrically disposed in the width direction of the inspection target wire, so that it is possible to prevent the erroneous detection attributable to the vibration in the width direction of the inspection target wire.

In the wire surface inspection device according to the second aspect, plural inspection unit sets are disposed to surround the inspection target wire. In one inspection unit set, there is a limitation in the range of the inspecting light which can be illuminated from the light source. Therefore, plural inspection unit sets are disposed to surround the inspection target wire, so that the entire surface of the inspection target wire can be inspected.

In the wire surface inspection device according to the third aspect, the inspecting light is shaped into a thin slit shape by concentrating the focal point of the inspecting light in the longitudinal direction of the inspection target wire. In this manner, the resolution in the longitudinal direction of the inspection target wire can be increased by concentrating the short axis of the inspecting light into a thin slit shape, so that it is possible to detect defects (discoloration, a stain, a scar, or the like) which are small in the longitudinal direction.

In the wire surface inspection device according to a fourth aspect, since parallel light or nearly-parallel light is illuminated as the inspecting light, the reflected light does not spread and thus the entire reflected light can be received by the light receiving sensor even though the light receiving sensor has a small size. Therefore, the light reception sensitivity improves. In addition, after the ellipse parallel light is formed one time, the concentration is performed and the light can be concentrated into the thinner slit-shaped beam. In other words, according to the aspect, it is possible to further concentrate the focal point in the short axis direction of the inspecting light (that is, longitudinal direction of the inspection target wire) while suppressing the spreading of the inspecting light.

In the wire surface inspection device according to the fifth aspect, in the case of surface inspection of the inspection target wire, it is possible to detect stain, scar, or the like even though the inspection target wire slightly vibrates in the transverse direction.

In the wire surface inspection device according to the sixth aspect, the vibration noise is removed from the output signal by offsetting the vibration components in the width direction by adding the output signals of the of the light receiving elements which are symmetrically disposed in the width direction of the inspection target wire, so that it is possible to prevent the erroneous detection attributable to the vibration of the inspection target wire in the width direction.

In a wire surface inspection device according to the seventh aspect, in the case of surface inspection of the inspection target wire, it is possible to detect stain, scar, or the like even though the inspection target wire slightly vibrates in the transverse direction.

BRIEF DESCRIPTION OF THE DRAWINGS

Fig. 1 is a schematic view for explaining a basic principle and a basic configuration.

Fig. 2 is a schematic view illustrating the appearance of a wire surface inspection device according to an embodiment.
Fig. 3 is a diagram for explaining an example of a shaping process for inspecting light using an optical system according.
Fig. 4 is a diagram for explaining the relationship between an illumination angle of inspecting light and a signal change rate.
Fig. 5 is a diagram for explaining a focal length of a light condensing lens and a difference of a scattering range of a reflected light.
Fig. 6 is a diagram for explaining equalization of light intensities in a long axis direction of the ellipse-shaped inspecting light by using a refraction type optical part.
Fig. 7 is a diagram illustrating the relationship between a position of a stained point (represented by an angle β) of an inspection target wire in the width direction and a light receiving voltage.
Fig. 8 is a diagram illustrating measurement results of transverse vibration amount of inspection target wires and a change in a light receiving signal.
Fig. 9 is a diagram for explaining the number of light receiving sensors in the cases a distance from an inspection target wire to a light receiving device varies, for example, 10 mm, 20 mm, and 30 mm, respectively.
Fig. 10 is a diagram for explaining a decrease in gap (non-detected zone) between adjacent optical sensors, the decrease being achieved by slanting optical sensors in the rear side.

Fig. 11 is a diagram illustrating an example of arrangement of inspection units in the case where a set of four inspection units is disposed.

Fig. 12 is a diagram illustrating another example of arrangement of optical sensors.

Fig. 13 is a diagram illustrating still another example of arrangement of optical sensors for decreasing a non-detected zone.

Fig. 14 is a diagram illustrating another embodiment.

Fig. 15 is a graph illustrating output signals of six light receiving elements in one inspection unit according to the embodiment illustrated in Fig. 14.

## EXPLANATION OF LETTERS AND NUMBERS

[0031]

10: wire surface inspection device
11: light projecting portion
12: optical system (optical processing portion)
13: cylindrical convex lens
14: cylindrical concave lens
15: secondary cylindrical convex lens (light condensing lens)
20 to 25: light receiving portion
20a to 20f, 21a to 21f, 22a to 22d, 23a to 23d, 24a to 24d, 25a to 25f: optical sensor (optical element)
25: detection portion
30, 31, 32, 33, 34, 35: inspecting light
40, 41: non-detected zone
51 ~ 54, 60 ~ 63: inspection unit
80: inspection target wire

## BEST MODE FOR CARRYING OUT THE INVENTION

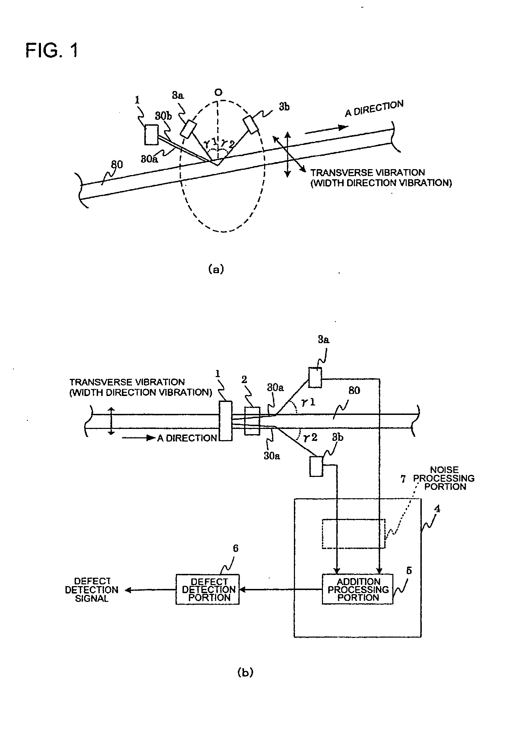

Hereinafter, embodiments of the present invention will be described in detail. Fig. 1 is a schematic view for explaining a basic principle and a basic configuration of the present invention. Fig. 1(a) is a perspective view schematically illustrating a light source 1 and light receiving elements 3a and 3b, and Fig. 1 (b) is a functional block diagram illustrating a wire surface inspection device. In Fig. 1(b), states of the light source 1 and the light receiving elements 3a and 3b as seen from the top are illustrated. Furthermore, as illustrated in Fig. 1(b), the light from the light source 1 is processed by an optical processing portion (optical system) 2 to be inspecting light. However, in Fig. 1(a), the optical processing portion 2 is not illustrated.

A cylindrical wire member 80 (hereinafter, referred to as a "wire 80") such as an insulated cable which is formed to extend in a wire shape is drawn to be wound at a high speed in the direction A illustrated in the figure. Inspection light beams 30a and 30b such as laser beams from the light source 1 are illuminated onto the surface of the wire 80, and the reflected light beams are received by light receiving elements 3a and 3b. The light receiving elements 3a and 3b are disposed at such positions so that the left and right central angles $\gamma$ are equal to each other ($\gamma1=\gamma2$) when the perpendicular line O of the wire 80 is set as a reference line and that the optical paths from the light source 1 to the light receiving elements 3a and 3b are substantially equal to each other in distance.

Furthermore, in Fig. 1(a), although the light receiving elements 3a and 3b are disposed at positions on a concentric circle, in the case where four or more light receiving elements are disposed, it is not necessary to dispose all the light receiving elements on the concentric circle, but any arrangement satisfying the above condition may be employed. For example, the left and right light receiving elements (in the width direction) may be symmetrically disposed on a straight line with respect to the width direction. In addition, light receiving elements (not shown) which are not symmetrically disposed with respect to the width direction may be included.

Output signals of the light receiving elements 3a and 3b which are symmetrically disposed with respect to the width direction are input to an addition processing portion 5 of a signal processing portion 4 to be added to each other. The output signal obtained from the addition is output to a defect detection portion 6. The defect detection portion 6 detects defect or stain based on whether or not the output signal is equal to or less than a predetermined threshold value. For example, if the stain or the defect exists, the reflected light decreases, so that the output signal of the light receiving element becomes weaker. Therefore, if the output signal is less than the threshold value, it is determined that the defect exists. Furthermore, the outputs of the light receiving elements which are not symmetrically disposed in the width direction are output to the defect detection portion 6 without use of the addition processing portion 5.

However, in the case where the wire 80 vibrates in the transverse direction, as easily expected from Fig. 1(b), if the vibration width is large, the inspecting light beams 30a and 30b illuminated from the light source 1 alternately deviate from the wire 80. If the inspecting light beams 30a and 30b deviate from the wire 80, there is no reflected light. Therefore, although there is no defect or the like, the output signals of the light receiving elements 3a and 3b are equal to or less than the threshold value, which results in erroneous detection. However, since the left and right light receiving elements 3a and 3b are symmetrically disposed, the output signals of the light receiving elements 3a and 3b change alternately in the opposite directions due to the vibration, so that the output signals have symmetric waveforms.

Therefore, the vibration components can be offset by adding the two output signals. In this manner, in the present invention, the influence on the detection of the vibration components can be suppressed by offsetting the changed amounts of the output signals that are generated due to the vibration of the wire 80 in the width direction by adding the output signals of the left and right symmetrically disposed light receiving elements, so that it is possible to accurately detect the defect such as scar (a bump, a cut, a foam, or the like) or the stain of the surface of the wire 80.

In addition, it is preferable that a noise processing portion 7 such as a noise filter is provided at an upstream of the signal processing portion 4 or in front of the addition processing portion 5 in the signal processing portion 4 so that noise of the output signal is removed before the output signal is subject to the addition process.

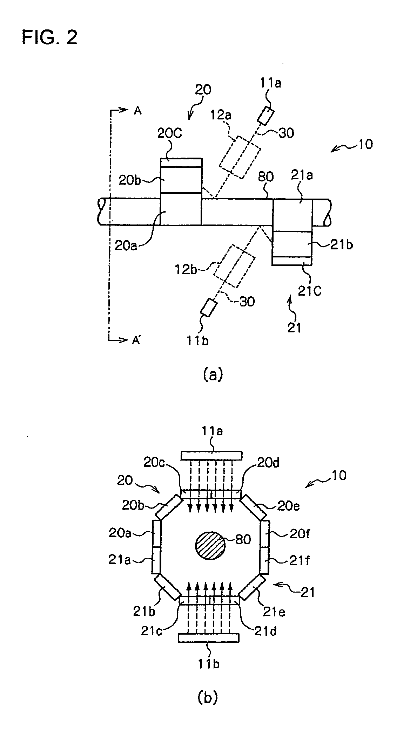

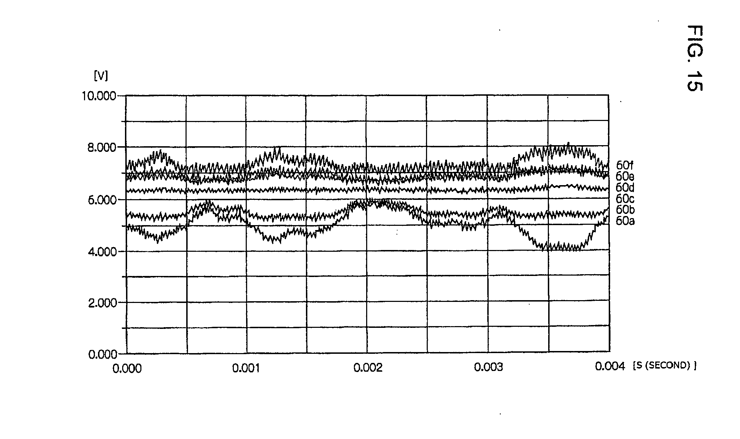

Hereinafter, the embodiments will be described in detailed with reference to Figs. 2 and 15. Fig. 2 is a diagram illustrating arrangement of a light source and light receiving elements or the like of a wire surface inspection device according to an embodiment of the present invention. In the hereinafter description, the signal processing portion 4 and the defect detection portion 6 are not illustrated in Figs. 2 to 15. Fig. 2(a) is a side view illustrating the arrangement of the components of the wire surface inspection device 10, and Fig. 2 (b) is a cross sectional view taken along line A-A'.

Each of the light projecting portions 11 (11a and 11b) is a light source emitting an inspecting light beam 30. As the light projecting portion (light source) 11, a laser and other light emitting devices may be used. The inspecting light beams 30 from the light projecting portions 11 are illuminated onto the inspection target wire 80 through an optical processing portion (optical system) 12 (12a and 12b), and the reflected light beams or the scattered light beams are sensed by light receiving portions 20 and 21. The optical system 12 (12a, 12b) is described later.

The light receiving portions 20 and 21 are configured to include light receiving elements (hereinafter, referred to as "optical sensors") 20a to 20f, which are constructed with a plurality of optical sensors or the like, and optical sensors 21a to 21f. The light receiving portion 20 is disposed so as to surround the upper half portion of the circumference of the inspection target wire 80, and the light receiving portion 21 is disposed so as to surround the lower half portion thereof. Therefore, it is possible to inspect the entire surface of the front and rear (upper and lower) surfaces of the inspection target wire 80 without dead angle.

In Fig. 2(b), although the 12 optical sensors 20a to 20f and 21a to 21f are disposed in a concentric shape to surround the inspection target wire 80, as illustrated in Fig. 2 (a), with respect to the real positions of the optical sensors, the positions of the light receiving portion 20 and the light receiving portion 21 are disposed to be shifted in the longitudinal direction of the inspection target wire 80. In this manner, it is preferable that the positions of the light receiving portions 20 and 21 are disposed to be shifted from each other. Therefore, it is possible to prevent the inspecting light incident from the other light projecting portion 11b onto the light receiving portion 20 and to prevent the inspecting light incident from the other light projecting portion 11a onto the light receiving portion 21, so that the light receiving portion is not influenced by the other inspecting light.

The output signals of each pair of the optical sensors 20a and 20f, 20b and 20e, and 20c and 20d of the light receiving portion 20 are added to each other in the signal processing portion (refer to Fig. 1(b)). Similarly, the output signals of each pair of the optical sensors 21a and 21f, 21b and 21e, and 21c and 21d of the light receiving portion 21 are added to each other in the signal processing portion (refer to Fig. 1(b)). In addition, the output signals of all the pairs of the symmetrically disposed optical sensors are not necessarily added to each other. Only the output signals of some pairs of the optical sensors may be added to each other, and the output signals of other optical sensors may be directly output to the defect detection portion 6. For example, only the output signals of the pair of the optical sensors 20a and 20f and the output signals of the pair of the optical sensors 21a and 21f may be added to each other, and other output signals may be directly output.

(Shaping Process for Inspecting Light)

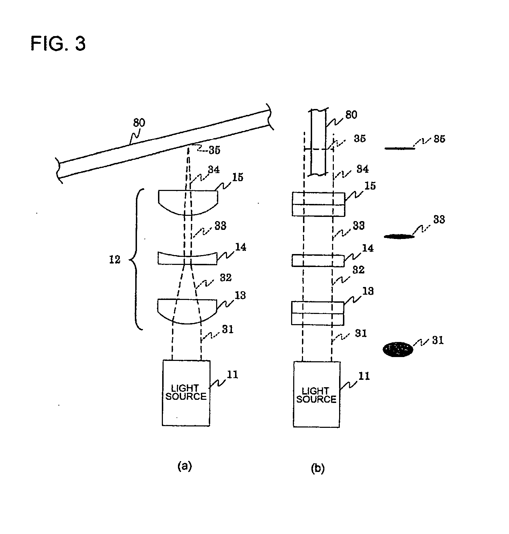

Fig. 3 is a schematic view for explaining an example of a shaping process for inspecting light in an optical system. Fig. 3 (a) is a schematic view illustrating the optical system 12 as seen in the transverse direction of the inspection target wire 80 which is an inspection target. Fig. 3 (b) is a view illustrating the optical system 12 illustrated in Fig. 3(a) as seen from the just upper position or the just lower position (the side of the light source 11) of the inspection target wire 80. In the right side of Fig. 3 (b), outer shapes of the inspecting light shaped by the optical system 12 are illustrated.

The inspecting light 31 from the light projecting portion 11 such as a laser emitting device is incident onto the optical system 12. In the optical system 12, a cylindrical convex lens 13, a cylindrical concave lens 14, and a cylindrical convex lens 15 are arrayed in this order. The cylindrical convex lens is used so as to concentrate the focal point of the circular or elliptic parallel light in one axial direction. The cylindrical concave lens is used so as to convert the incident light, which is concentrated with a predetermined angle in one axial direction, into a parallel light.

The laser beam generated by the light projecting portion 11 is an elliptic parallel light (inspecting light) 31 and is incident onto the cylindrical convex lens 13. The focal point of the incident parallel light 31 is concentrated by the cylindrical convex lens 13 so that the ellipse of the inspection target wire 80 is decreased in size in the long axis direction, and thus, the parallel light 31 is shaped into an horizontally-elongated thin elliptic light 32.

Next, the inspecting light 32 which is angled so as to concentrate the focal point thereof is allowed to return to the parallel light by the cylindrical concave lens 14. The inspecting light 33 which is allowed to return to the parallel light is concentrated again by a secondary cylindrical convex lens 15 in the long axis direction of the ellipse of the inspection target wire 80, so that the focal point of the inspecting light 33 can be adjust to the inspection target wire 80. Therefore, the short, thin slit-shaped inspecting light 35 which is formed to extend in the width direction is illuminated as a spot on the inspection target wire 80.

In other words, as illustrated in Figs. 3 (a) and (b), the focal point of the inspecting light 35 is concentrated so as to be thin and sharp in the longitudinal direction of the inspection target wire 80. However, as illustrated in Fig. 3(b), the original length of the inspecting light 35 in the width direction of the inspection target wire 80 is maintained. Therefore, the inspecting light 35 is illuminated as a horizontally-elongated thin slit-shaped beam on the inspection target wire 80.

In this manner, by modifying the inspecting light into the thin slit-shaped beam by concentrating the focal point of the one axis of the inspecting light, it is possible to increase an S/N ratio at the time of detecting the stain, the scar, or the like of the inspection target wire, so that it is possible to detect infinitesimal stain or the like. For example, the inspecting light 35 which is shaped in a slit shape can be condensed so that the width in the short axis direction of the inspecting light 35 is equal to or less than 150 $\mu$m. Since the width of the inspecting light 35 is allowed to be equal to or less than 150$\mu$m, it is possible to detect infinitesimal stain or the like which is beyond the visual detection limitation.

It is preferable that, in the ellipse of the inspecting light 35 shaped in a slit shape, the length of the long axis (the transverse direction length of the inspecting light) is sufficiently larger than the width (wire diameter) of the inspection target wire 80. In addition, it is more preferable that the inspecting light 35 is shaped in such a manner that the long axis direction length of the ellipse is in a range of from 3 to 6 mm, and the length in the short axis direction is 200 $\mu$m or less. For example, it is preferable that, if the wire diameter of the inspection target wire 80 is about 1 mm, the long width of the beam-like inspecting light 35 is about 5 mm.

In addition, from the defection size (150 $\mu$m) which is to be detected and the size (5 mm) of the light emitted from the light source, $5 \div 0.15 \fallingdotseq 30$, and thus, it is preferable that the ratio (aspect ratio) of the width in the long axis direction to the width in the short axis direction of the ellipse of the inspecting light 35 is 30 or more. In addition, for example, in the case where the aspect ratio is 60, the vibration becomes strong in comparison with the case where the aspect ratio is 30. However, since the beam spreads, the power of the corresponding portion of the inspection target wire 80 decreases by half.

As the power decreases, the amount of signal change due to the defect decreases. Therefore, the amplification ratio needs to be doubled. At this time, the ambient light or the electromagnetic noise increases twice, so that the S/N ratio of the inspection deteriorates. In addition, it is necessary to broaden the beam of the light source and thus the lens needs to be added. In addition, it is necessary to increase the sizes of the lens and mirror and thus the head increases in size. In addition, since only the central portion of the beam is used but other portions are not, the loss in energy increases. From the viewpoint of the trade-off relationship, it is preferable that the aspect ratio is 60 or less.

Therefore, in the case where the surface inspection is performed during the extraction of the inspection target wire 80, although there is a small vibration of the inspection target wire 80 in the transverse direction, stain, scar, or the like can be detected.

However, when the transverse vibration is large, since the output signal is influenced by the vibration, it may be difficult to accurately detect the stain, scar, or the like. According to the present invention, in order to more securely prevent the influence of the transverse vibration, the outputs of the symmetrically disposed optical sensors are added to each other, so that the detection of the defect is achieved. (Illumination Angle of Inspecting Light)

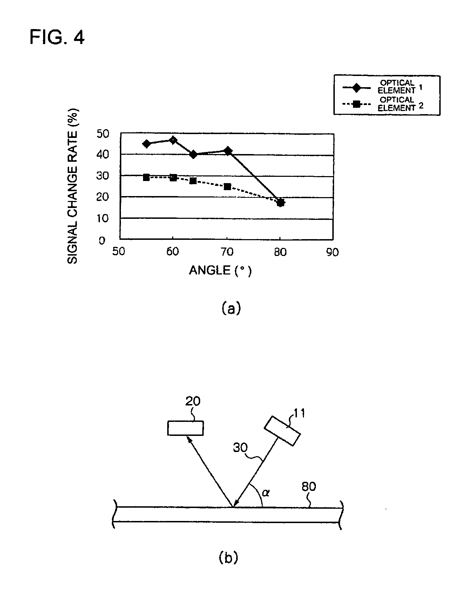

With respect to the illumination angle of the inspecting light from the light projecting portion 11, an appropriate angle exists. Fig. 4 illustrates the relationship between an illumination angle of inspecting light and a signal change rate. Fig. 4 (a) is a graph illustrating a change rate of a light receiving signal according to a change in the illumination angle $\alpha$ of the inspecting light 30, and Fig. 4 (b) is a view illustrating the illumination angle $\alpha$ with respect to the inspection target wire, which is the vertical axis of the graph of Fig. 4(a). Herein, the graph of Fig. 4 (a) illustrates the change rate of the light receiving signal when changing the illumination angle $\alpha$ (incident angle=90-$\alpha$) of the inspecting light 30 illuminated from the light projecting portion 11 to the inspection target wire 80. In addition, the change rate of the light receiving signal represents a change rate [(vl-v2) /v1] of the light receiving voltage v1 of the case where there is no stained point (reference black point) in the inspection target wire with respect to the light receiving voltage v2 of the case where there is a stained point. The higher signal change rate represents the higher stained point detection ability. The graph of the optical element 1 represents the measurement result of the optical sensor disposed just above the inspection target wire 80, and the graph of the optical element 2 represents the measurement result of the optical sensor which is disposed at the angle of 45° on the concentric circle to the reference point which is the point just above the inspection target wire 80.

According to the measurement result, at the angle where the illumination angle $\alpha$ is larger than 70°, the change rate rapidly drops. In addition, if the illumination angle $\alpha$ decreases, the transverse direction distance from the light projecting portion 11 to the light receiving portion 20 increases, so that the entire size of the inspection device increases. In terms of the miniaturization of the device, it is preferable that the illumination angle $\alpha$ is

large. However, in terms of the defect detection ability, it is preferable that the illumination angle α is small. It can be understood from the graph of Fig. 4 (a) that, if the illumination angle α exceeds 70°, the detection ability deteriorates. Therefore, considering the miniaturization of the inspection device, it is preferable that the illumination angle α of the inspecting light 30 to the inspection target wire 80 is in a range of from 50° to 70° (incident angle of from 20° to 40°).

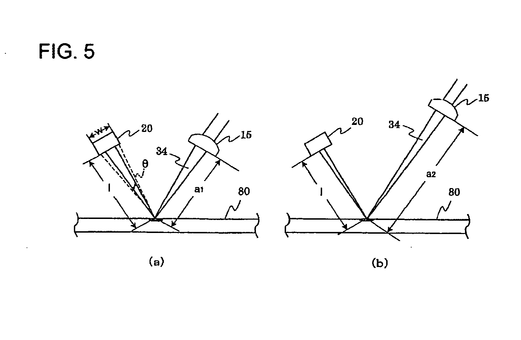

In addition, the relationship between the position of the light receiving sensor and the focal length of the light condensing lens (cylindrical convex lens) 15 of the optical system 12 is described with reference to Fig. 5. Fig. 5 is a view for explaining a difference between the focal length of the light condensing lens 15 and the scattering range of the reflected light. Fig. 5(a) illustrates a case where the focal length a1 of the light condensing lens 15 is short, and Fig. 5 (b) illustrates a case where the focal length a2 is long.

As clarified from Fig. 5, it can be understood that, when the distances 1 to the light receiving portions 20 is set to be the same, the longer focal length a2 illustrated in Fig. 5 (b) leads to the reduced scattering angle at the light receiving portion 20. For example, in the case where the focal length of 50 mm, since the reflected light spreads in a short distance , if the light receiving sensor is not closely disposed, the entire reflected light cannot be received. On the contrary, in the case where the focal length is 150 mm, since the reflected light spreads in a long distance, even though the light receiving sensor is disposed at a long distance, the entire reflected light can be received.

As a result of experiments, it can be understood that, in the case where general light receiving sensors are used, if the distance from the inspection target wire 80 to the light receiving portion 20 is in a range of from 10 mm to 20 mm, the focal length of the light condensing lens 15 is preferably 100 mm or more and, in particular, more preferably, about 150 mm.

When the distance 1 (optical path) from the inspection target wire 80 to the light receiving portion 20 and the width w of the light receiving plane illustrated in Fig. 5(a) are set to be the same, the maximum value of a light condensing angle θ of the reflected light is expressed by the following Equation. In other words, if the angle is equal to or less than the light condensing angle θ expressed by the following Equation, the light can be received by the light receiving sensor having the width w disposed at the distance 1.

[Equation 1]

$$\tan(\frac{\theta}{2}) = \frac{w/2}{\ell}$$

$$\frac{\theta}{2} = \tan^{-1}(\frac{w}{2\ell})$$

$$\theta = 2\tan^{-1}(\frac{w}{2l})$$

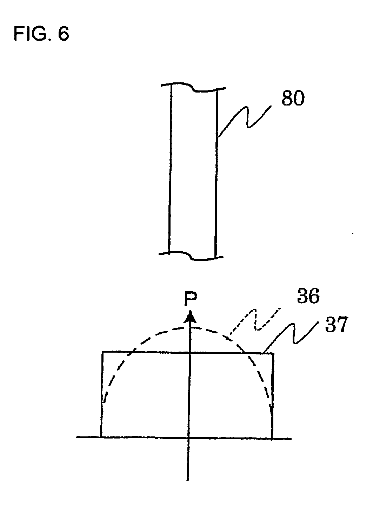

In addition, the light intensity P of the condensed inspecting light 35 has a Gaussian distribution indicated by the broken line 36 in Fig. 6. Herein, it is preferable that the intensity P in the long axis direction of the ellipse of the inspecting light 35 indicated by the solid line 37 is uniformed by using diffraction type optical parts.
(Arrangement and Configuration of Light Receiving Portion)

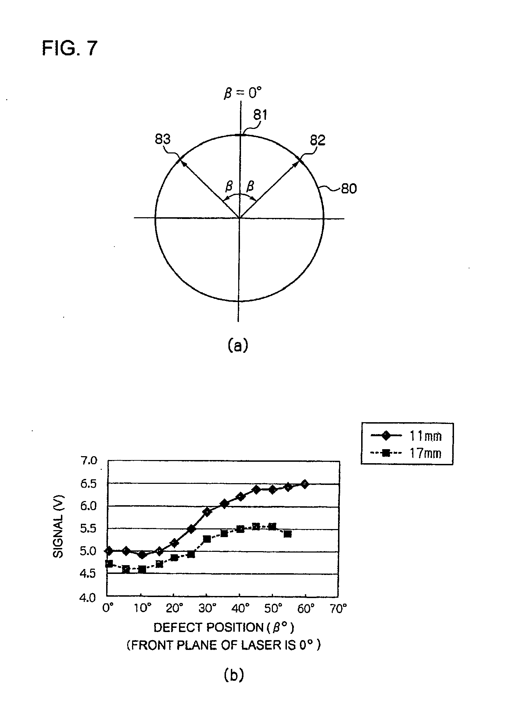

Fig. 7 illustrates the relationship between positions of black points (indicated by the angle β) on the circumference of the inspection target wire and light receiving voltages. Fig. 7 (a) is a conceptual view for explaining the angles β representing the positions of the black points (stained points) on the circumference. In the case where the position of the top of the inspection target wire 80 (position of the black point 81) as seen from the light projecting portion 11 is set as a start point β=0°), the position of the black point on the circumference of the inspection target wire 80 is defined by the angle β between the line from the center to the start point and the line from the center to the black point. The black points 82 and 83 are treated as the same position because the black points are symmetrically disposed. Therefore, 0°≤β≤90°. In other words, the position of the black point in the width direction (on the circumference) is represented by the angle β shifted from the start point, that is, the position of the top of the inspection target wire 80.

Fig. 7(b) is a graph illustrating the measurement results of the light receiving signals with respect to the positions of the black points. The graph illustrating the measurement results of the cases where the distances (optical paths) 1 from the inspection target wire 80 to the light receiving portion 20 are 11 mm and 17 mm, respectively. Since the angles β representing the positions of the black points are symmetric and the light receiving voltages thereof are the same, only the one measured side is illustrated in the graph.

If there is a black point, illuminated light energy is absorbed, so that the amount of the reflected light decreases. Therefore, the amount of received light decreases and thus the output voltage of the light receiving portion 20 decreases. In other words, it is represented that, the lower the voltage, the higher the black point recognition sensitivity. Furthermore, the magnitude of the voltage of the light receiving signal is not a matter of interest, but the change amount of the light receiving signal caused by the difference between the positions of the black points is important.

When the position of the light receiving portion 20 is at a distance in a range of from about 11 mm to about 17 mm from the inspection target wire 80, one light receiving portion 20 (light receiving sensor) receives a positive reflected light in a range of from about 15° to about 22.5°. Therefore, if the inspection target wire 80 is rotated, there is no black point in the portion where the light receiving portion 20 receives the positive reflected light. Since the black point has a certain size, although the inspection target wire 80 is rotated by 15° to 22.5°, the black point does not completely disappear in the portion where the light receiving portion 20 receives the positive reflected light. In the portion where the light receiving amount is uniform due to the rotation of the inspection target wire 80, since the black point completely disappears in the portion where the light receiving portion 20 receives the positive reflected light, the portion is regarded as the good part portion, and the recognition sensitivity for the black point is estimated according to the difference in the light receiving amount between the good part portion and the defective portion.

In Fig. 7 (b), in the case where the distance (optical path) 1 from the inspection target wire 80 to the light receiving portion 20 is 11 mm, the base level of the good part portion is about 6.5 V, and in the case where the distance (optical path) 1 from the inspection target wire 80 to the light receiving portion 20 is 17 mm, the base level of the good part portion is about 5.5 V. It can be understood from the measurement result that the sensitivity is the best in the angle range of from 0° to 20°, and the black point can be sufficiently detected until the angle of 35°. If the angle exceeds 40°, the change in voltage is small. In other words, the measurement result shows the tendency that, if the position of the black point is shifted toward the end, it is difficult to accurately detect the black point.

Therefore, in the case where the defect is positioned at the end portion of the detection angle with respect to one sensor, the accuracy of the detection decreases. Accordingly, it is preferable that plural light receiving sensors are disposed at a suitable angle interval around the axis of the inspection target wire so that the defect can be detected by the other sensors.

In addition, with respect to the same defect, the detection sensitivity varies depending on the position of the defect, and the reflection amount of the light varies, so that the base levels are different between the sensors. Therefore, it is more preferable that, in order to equalize the detection sensitivities of the sensors the base levels are adjusted to predetermined values, and the threshold values are set to different values according to the positions of the sensors.

In addition to the aforementioned method, as the method of adjusting the detection sensitivity, there is a method of equalizing the levels (differences from the base levels) of the detection signals of the sensors in the case where the same defect is shifted in the circumferential direction by gain adjustment or the like and, after that, equalizing the base levels or a method of setting the threshold values according to the sensors so as to detect the same defect without adjustment of the detection signals.

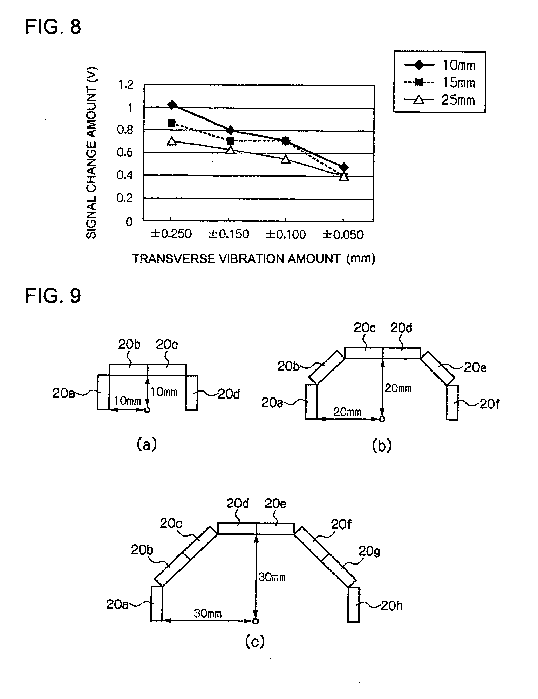

Fig. 8 is a view illustrating measurement results of the change of the light receiving signal with respect to the magnitude of the transverse vibration of the inspection target wire. The vertical axis indicates the difference between the light receiving signal (output voltage) of the light receiving portion 20 in the case where there is no transverse vibration and the light receiving signal (output voltage) in the case where there is transverse vibration as the "signal change amount (V)," and the horizontal axis indicates the magnitude (amplitude) of the transverse vibration. The same shape and magnitude of the inspecting light 35 as the slit shape having a size of 5 mm x 0.15 mm described above are used. The graph illustrates the measurement results in the cases where the distance 1 (optical path) (refer to Fig. 5 (a)) from the inspection target wire 80 to the light receiving portion 20 (light receiving sensor) is 1=10 mm, 1=15 mm, and 1=25 mm.

It can be understood from the measurement result that, as the transverse vibration is small, the change amount of the light receiving signal is also small. In addition, it can be understood that, as the distance from the inspection target wire 80 to the light receiving sensor becomes longer, the influence of the transverse vibration decreases. However, when the distance is long, many light receiving sensors need to be disposed to cover the entire circumference of the inspection target wire 80. Figs. 9(a), 9(b) and 9 (c) illustrate that different numbers of light receiving sensors need to be used when the distances from the inspection target wire 80 to the light receiving sensors are changed, for example, 10 mm, 20 mm, and 30 mm. Although Fig. 9 illustrates the upper half portion, the same illustration may also apply to the lower half portion.

As illustrated in Fig. 9(a), in the case where the distance is 10 mm, 4 light receiving sensors 20a to 20d are needed to cover the upper half portion of the inspection target wire 80 without dead angle, so that a total of 8 light receiving sensors are needed, including the light receiving sensors for the lower half portion. As illustrated in (b), in the case where the distance is 20 mm, 6 light receiving sensors 20a to 20f are needed for the upper half portion, so that a total of 12 light receiving sensors are needed. As illustrated in (c), in the case where the distance is 30 mm, 8 light receiving sensors 20a to 20h are needed for the upper half portion, so that a total of 16 light receiving sensors are needed. In this manner, if the distance 1 from the inspection target wire 80 increases, the more light receiving sensors are needed. As the distance where the influence of the transverse vibration is suppressed and too many light receiving sensors are not needed, the distance 1 from the inspection target wire 80 to the light receiving sensor is preferably in a range of from about 15 mm to about 20 mm.

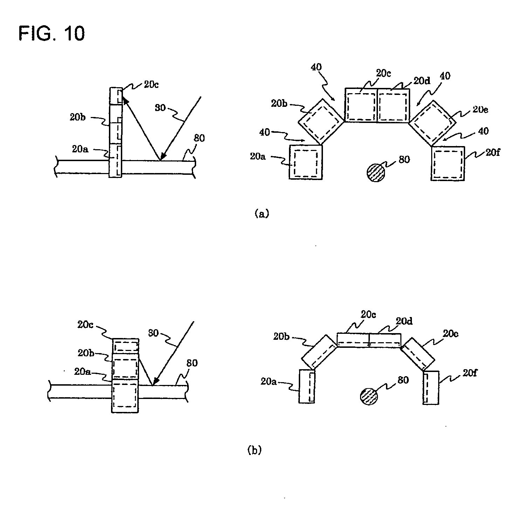

A method of disposing the optical sensors 20a to 20f and the optical sensors 21a to 21f constituting the light receiving portions 20 and 21 is described with reference to Fig. 10. Fig. 10 (a) is a view illustrating the case where the optical sensors 20a to 20f are disposed to be perpendicular to the inspection target wire 80, and Fig. 10(b) is a view illustrating the case where the light receiving planes of the optical sensors 20a to 20f are disposed to be parallel to the inspection target wire 80.

As seen from Fig. 10 (a), if the optical sensors 20a to 20f are disposed to be perpendicular to the longitudinal direction of the inspection target wire 80, there may be a undetectable zones 40 where the light receiving sensors cannot sense. However, in this manner, if the optical sensors are disposed to be perpendicular, the reflected light beams pass through the centers of the light receiving sensors.

Furthermore, in the case of the arrangement of Fig. 9(a), the light receiving elements 20a and 20d and the light receiving elements 20b and 20c make pairs of light receiving elements which are objects to be subjected to the addition process. In addition, in the case of the arrangement of Fig. 9(b), the light receiving elements 20a and 20f, the light receiving elements 20b and 20e, and the light receiving elements 20c and 20d make pairs of light receiving elements which are objects to be subjected to the addition process. In the case of the arrangement of Fig. 9 (c), the light receiving elements 20a and 20h, the light receiving elements 20b and 20g, the light receiving elements 20c and 20f, and the light receiving elements 20d and 20e make pairs of light receiving elements which are objects to be subjected to the addition process. Similarly, in the examples described hereinafter, since the symmetrically disposed light receiving elements make a pair, the description about which light receiving elements make respective pairs is not given in the following examples.

As illustrated in Fig. 2(a), in the wire surface inspection device 10 according to the present invention, the positions of a plurality of inspection unit sets, each including the light projecting portion 11, the optical system 12, and the light receiving portion 20, are disposed to be shifted in the longitudinal direction of the inspection target wire 80 and the angles are shifted from one another in the axial direction of the inspection target wire 80. Such arrangement of shifting in the longitudinal direction is effective in preventing the negative influence caused when the reflected lights of the inspecting lights of different sets are incident onto to the light receiving portions of other sets.

In the example of Fig. 2, although a set of two inspection units is provided, a set of arbitrary number of inspection units such as a set of three, four, five, or six inspection units may be provided. In the case where a set of three inspection units is provided, it is preferable that the positions of the inspection units in the longitudinal direction are shifted from one other, and the arrangement angle with respect to the axial direction of the inspection target wire 80 is shifted by 120°. In addition, it is preferable that, the arrangement angle of the case of using the four inspection units is shifted by 90°; the arrangement angle of the case of using the five inspection units is shifted by 72°; and the arrangement angle of the case of using the six inspection units is shifted by 60°.

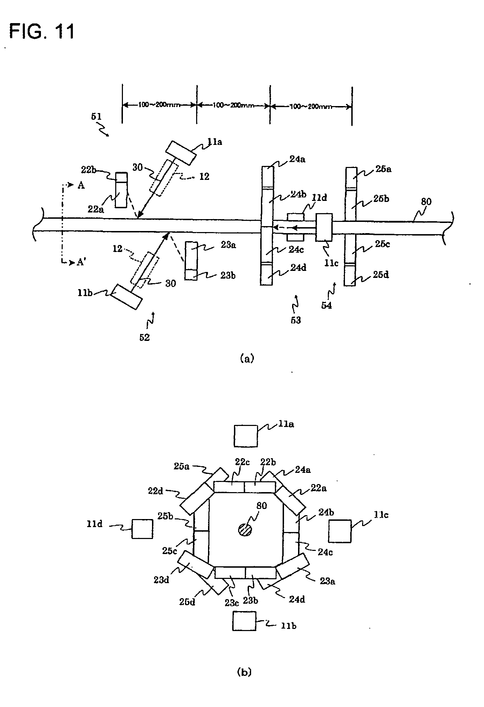

Fig. 11 illustrates an example of arrangement of inspection units in the case where a set of four inspection units 51 to 54 is provided. In the example illustrated in Fig. 11, each of the inspection units 51 to 54 illustrates four optical sensors, and each of the inspection units 51 to 54 covers a range of about 150°. Fig. 11(a) is a schematic view illustrating a wire surface inspection device including a set of four inspection units 51 to 54 as seen from the side, and Fig. 11(b) is a cross sectional view taken along line A-A'. The inspection units 51 to 54 include four optical sensors 22a to 22d, 23a to 23d, 24a to 24d, and 25a to 25d, respectively.

As illustrated in Fig. 11 (a), although the positions of the optical sensors are shifted from one another in the longitudinal direction of the inspection target wire 80, as seen from Fig. 11(b), all the optical sensors are disposed to surround the circumference of the inspection target wire 80, and the inspection target wire 80 moves so as to be drawn or extracted in the axial direction, so that it is possible to entirely detect the inspection target wire 80 without dead zone. In addition, the inspection units 51 to 54 are disposed so that the end portions of the optical sensors overlap each other. Therefore, it is possible to increase accuracy of detection of the defect of the end portion of the inspecting light. It is preferable that the adjacent inspection units among the inspection units 51 to 54 are disposed to be separated from each other by a distance of from about 100 mm to about 200 mm in order to prevent the influence of the inspecting light beams.

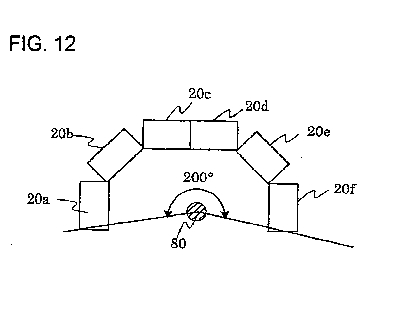

Fig. 12 illustrates another example of arrangement of the optical sensors. In the example of Fig. 12, six optical sensors 20a to 20f similar to those illustrated in Fig. 10 are deposed to cover 200° of the circumference of the inspection target wire 80. Therefore, it is possible to detect the reflected light of the inspection target wire 80 without loss. In Fig. 12, although only one set of the optical sensors are illustrated, two sets, three sets, four sets, or desired number of sets of the optical sensors may be disposed so that the optical sensors in such an arrangement are disposed to cover the circumference of the inspection target wire 80.

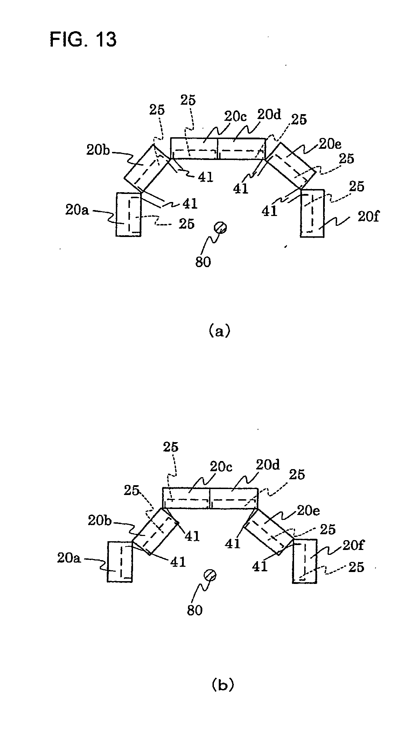

Fig. 13 illustrates still another example of arrangement of the optical sensors. In the example illustrated in Fig. 13, six optical sensors 20a to 20f similar to those of Fig. 12 are used. In Fig. 13, detection portions 25 of the optical sensors 20a to 20f are illustrated. Fig. 13 (a) illustrates the same arrangement state as that of Fig. 12, and Fig. 13(b) illustrate an arrangement state where positions of some optical sensors, that is, the optical sensors 20b and 20e are shifted.

Since each of the detection portions 25 of the optical sensors 20a to 20f is slightly smaller than the optical sensor in the outer shape, if the optical sensors 20a to 20f are disposed so as for the front surfaces of the optical sensors to abut one another as illustrated in Fig. 13 (a), non-detected zones 41 exists between the detection portions 25 of the adjacent optical sensors

As illustrated in Fig. 13(b), if the positions of some of the optical sensors, that is, the optical sensors 20b and 20e are disposed to be shifted in the direction toward the inspection target wire 80, the non-detected zones 41 are decreased. In this manner, it is possible to decrease the non-detected zones 41 by shifting the positions of the optical sensors towards the inspection target wire 80. In addition, it is also possible to adjust the sensitivity of the optical sensor by changing the distance from the inspection target wire 80 to the optical sensor.

In Fig. 13 (b), although the case where the positions of the optical sensors 20b and 20e are shifted is illustrated, it is also possible to decrease some of the non-detected zones 41 by shifting the positions of other optical sensors (for example, 20c and 20d). In the example illustrated in Fig. 13, as illustrated in Fig. 13(b), it is most efficient to shift the positions of the optical sensors 20b and 20e. However, which optical sensors are to be shifted in position is an optional configuration which can be appropriately changed according to the structure or the like of the apparatus.

Furthermore, in the above description, although only the embodiment where the inspecting light is shaped into the slit-shaped inspecting light by concentrating the inspecting light using the cylindrical convex lens 13, the cylindrical concave lens 14, light condensing lens (cylindrical convex lens) 15, or the like is described, the inspecting light may be shaped into a thin slit-shaped inspecting light by using a transmitting light of a thin slit obtained by illuminating the inspecting light from the light source on the thin slit (a slit having a width of about 100 micron to several hundred micron).

As the light source, a light source (for example, LED or the like) other than the laser may be used besides the laser source. In this case, it is preferable that the output light is a parallel light. For example, the light source is disposed at a focal point portion of a parabolic reflecting mirror (paraboloidal mirror), so that it is possible to output the parallel light as a reflected light of the paraboloidal mirror.

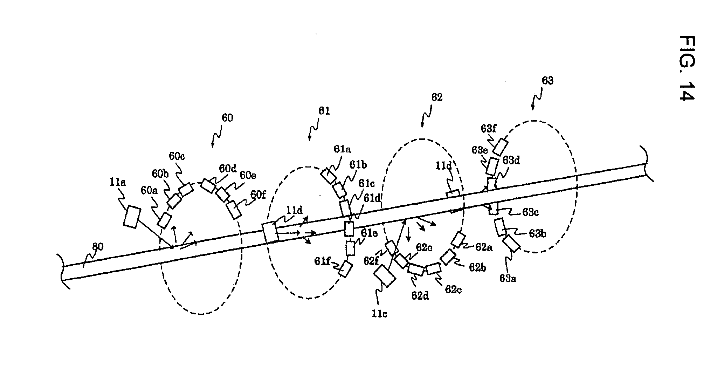

Fig. 14 illustrates still another embodiment. In the embodiment, four inspection units 60 to 63 are disposed around the wire 80 in an equal interval. The inspection units 60 to 63 are disposed to be shifted in the axial direction so as not to be overlapped. In this manner, the range of 360° is detected by the four inspection units 60 to 63, so that it is possible to securely inspect the entire circumference. Each of the inspection units 60 to 63 includes six light receiving elements (three sets) (60a to 60f, 61a to 61f, 62a to 62f, and 63a to 63f) which are symmetrically disposed in the axial direction. Therefore, it is possible to accurately detect the reflected light of the inspection range of each of the inspection units 60 to 63. In order to accurately detect the defect of the surface of the wire 80, it is preferable that the four inspection units 60 to 63 and the six light receiving elements (three sets) are disposed in this manner.

If the added outputs of the light receiving elements are described by using the inspection unit 60, the outputs of the light receiving elements 60a and 60f, the outputs of the light receiving elements 60b and 60e, and the outputs of the light receiving elements 60c and 60d are added respectively, and after that, are output to the defect detection portion 6 (refer to Fig. 1(b)). In addition, the outputs of only one set, for example, only the light receiving elements 60a and 60f may be added to each other. In this case, the outputs that are not added are directly output to the defect detection portion 6. The process for the output signals of the light receiving elements of the other inspection units 61 to 63 is also the same as that of the inspection unit 60.

Fig. 15 is a graph illustrating the output signals of the light receiving elements 60a to 60f of the inspection unit 60 illustrated in Fig. 14. The graph illustrates the output signals when the vibration occurs in the portion where there is no defect.

As seen from Fig. 15, the light receiving elements 60a and 60f, the light receiving elements 60b and 60e, and the light receiving elements 60c and 60d have substantially symmetric waveforms, respectively. Therefore, by adding outputs of the corresponding light receiving elements in each pair, it is possible to cancel the vibration components.

## Claims

1. A wire surface inspection device (10) comprising:

a light source (11a, 11b) which outputs inspecting light (30) illuminating a surface of an inspection target wire (80);
an optical processing portion (12a, 12b) which shapes the inspecting light (30) output from the light source (11a, 11b) and then allows the inspecting light to illuminate the surface of the inspection target wire (80);
a light receiving portion (20, 21)which receives reflected light of the inspecting light (30) from the inspection target wire(80); and
a defect detection portion (6) which performs a calculation process on output signals of the light receiving portion (20, 21) and detects a defect of the surface of the inspection target wire (80) based on the calculated output signal,

**characterized in that** the optical processing portion (12a, 12b) shapes the inspecting light (30) into a thin slit shape (35) having a long axis in a width direction of the inspection target wire (80), a short axis in a longitudinal direction of the inspection target wire (80), a length of the long axis is larger than a wire diameter of the inspection target wire (80) and an uniformed intensity in a long axis direction of the inspecting light;

the light receiving portion (20, 21) has a set of light receiving elements (20a-20f, 21a-21f), each having a flat light receiving plane receiving the reflected light of the inspecting light, which are arranged so as to surround at least a half portion of a circumference of the inspection target wire without dead angle;

at least two sets of inspection units (11a, 12a, 20 ; 11b, 12b, 21), each set having the light source (11a, 11b) the optical processing portion (12a, 12b) and the light receiving portion (20, 21), are disposed at different positions which are respectively located in a concentric shape to surround the inspection target wire (80) and shifted from one other in the longitudinal direction of the inspection target wire (80);

among light receiving elements (20a-20f, 21a-21f) of the sets forming the light receiving portion (20, 21), a pair of light receiving elements , facing each other across the inspection target wire, are disposed so as to have same distance from a center of the inspecting target wire (80) to the light receiving plane of the light receiving element respectively; and

when a width of the light receiving plane is "w" and a distance from a reflection plane of the inspection target wire (80) to the light receiving plane is "1", a light condensing angle θ of the reflected light incident onto the flat light receiving plane of each light receiving elements is expressed by

$$\theta \leqq 2 \tan^{-1} (\frac{w}{2l}).$$

2. The wire surface inspection device (10) according to claim 1,

   **characterized in that** the optical processing portion (12a, 12b) shapes the inspecting light into the thin slit shape by concentrating a focal point of the inspecting light output from the light source so that the short axis thereof is in the longitudinal direction of the inspection target wire (80) and then optical processing portion allows the inspecting light to illuminate the inspection target wire (80).

3. The wire surface inspection device (10) according to claim 2,

   **characterized in that** the optical processing portion (12a, 12b) includes a cylindrical convex lens (13) which concentrates the focal point of the inspecting light in a short axis direction; a cylindrical concave lens (14) which converts concentrated inspecting light into parallel light; and a light condensing lens (15) which further concentrates the focal point of the inspecting light converted into the parallel light in the short axis direction and allows the inspecting light as a slit-shaped spot light to illuminate the inspection target wire (80).

4. The wire surface inspection device (10) according to any one of claims 1 to 3,

   **characterized in that** the optical processing portion shapes the inspecting light incident onto the inspecting target wire (80) in such a manner that a length in the long axis direction of the inspecting light is in a range of from 3 to 6 mm, and a length in a short axis direction is 200 μm or less.

5. The wire surface inspection device (10) according to claim 3,

   **characterized in that** a focal length of the light condensing lens is 100 mm or more.

6. The wire surface inspection device (10) according to any one of claims 1 to 5,

   **characterized in that** at least three sets of inspection units (51-54), each set including the light source, the optical processing portion and the light receiving portion, are disposed;

   positions of the inspection units (51-54) are shifted from one other in the longitudinal direction of the inspection target wire (80);

   angles of the inspection units with respect to a central axis as the longitudinal direction of the inspection target wire (80) are shifted from one other; and

   a combination of the light receiving portions of the inspection units (51-54) makes a circumference of the inspection target wire is surrounded by all the inspection units.

7. The wire surface inspection device (10) according to claim 6,

   **characterized in that** the wire surface inspection device including three sets of the inspection units and the inspection units are arranged in such a manner that each angle respect with the central axis as the longitudinal direction of the inspection target wire (80) is shifted by 120°.

8. The wire surface inspection device (10) according to claim 6,
**characterized in that** the wire surface inspection device including four sets of the inspection units (51-54) and the inspection units (51-54) are arranged in such a manner that each angle respect with the central axis as the longitudinal direction of the inspection target wire (80) is shifted by 90°.

9. The wire surface inspection device (10) according to claim 6,
**characterized in that** the wire surface inspection device including six sets of the inspection units (20a-20f) and the inspection units (20a-20f) are arranged in such a manner that each angle respect with the central axis as the longitudinal direction of the inspection target wire (80) is shifted by 60°.

10. The wire surface inspection device (10) according to any one of claims 1-9,
**characterized in that** the inspecting light is allowed to illuminate with an incident angle in a range of from 20° to 40° with respect to the inspection target wire (80).

11. The wire surface inspection device (10) according to claim 10,
**characterized in that** the light receiving elements of the light receiving portion are disposed at a distance of 10mm-30mm from the inspection target wire (80).

## Patentansprüche

1. Drahtoberflächen-Inspektionsvorrichtung (10), umfassend:

   eine Lichtquelle (11a, 11b), die ein Inspektionslicht (30) für das Beleuchten einer Oberfläche eines zu inspizierenden Zieldrahtes (80) ausgibt;
   einen optischen Verarbeitungsabschnitt (12a, 12b), der das Inspektionslicht (30), das von der Lichtquelle (11a, 11b) ausgegeben wird, formt, und es dann dem Inspektionslicht gestattet, die Oberfläche des zu inspizierenden Zieldrahtes (80) zu beleuchten;
   einen Lichtempfangsabschnitt (20, 21), der reflektiertes Licht des Inspektionslichts (30) von dem zu inspizierenden Zieldraht (80) aufnimmt; und
   einen Fehlererkennungsabschnitt (6), der ein Berechnungsverfahren an Ausgabesignalen des Lichtempfangsabschnitts (20, 21) durchführt und einen Oberflächenfehler des zu inspizierenden Zieldrahtes (80) basierend auf dem berechneten Ausgangssignal erfasst,
   **dadurch gekennzeichnet, dass** der optische Verarbeitungsabschnitt (12a, 12b) das Inspektionslicht (30) als einen schmalen Schlitz (35) mit einer langen Achse in einer Breitenrichtung des zu inspizierenden Zieldrahtes (80), einer kurzen Achse in einer Längsrichtung des zu inspizierenden Zieldrahtes (80), wobei eine Länge der lange Achse größer als ein Drahtdurchmesser des zu inspizierenden Zieldrahtes (80) ist, und einer gleichmäßigen Intensität in der Richtung einer langen Achse des Inspektionslichtes formt;
der Lichtempfangsabschnitt (20, 21) einen Satz von Lichtempfangselementen (20a-20f, 21a-21f) umfasst, wobei jedes eine flache Lichtempfangsebene zum Empfangen des reflektierten Lichtes des Inspektionslichtes hat, welche so angeordnet sind, dass sie wenigstens eine Hälfte des Umfangs des zu inspizierenden Zieldrahtes ohne toten Winkel umgeben;
wenigstens zwei Sätze von Inspektionseinheiten (11a, 12a, 20; 11b, 12b, 21), wobei jeder Satz die Lichtquelle (11a, 11b), den optischen Verarbeitungsabschnitt (12a, 12b) und den Lichtempfangsabschnitt (20, 21) umfasst, an unterschiedlichen Positionen jeweils in konzentrischer Form angeordnet sind, um den zu inspizierenden Ziel (80) zu umgeben, und voneinander in Längsrichtung des zu inspizierenden Zieldrahtes (80) verschoben sind;
unter den Lichtempfangselementen (20a-20f, 21a-21f) der Sätze, die den Lichtempfangsabschnitt (20, 21) bilden, ein Paar von Lichtempfangselementen, die einander über den zu inspizierenden Zieldraht gegenüberliegen, so angeordnet ist, dass diese jeweils den gleichen Abstand von einer Mitte des zu inspizierenden Zieldrahtes (80) zur Lichtempfangsebene des Lichtempfangselementes haben; und dass
wenn eine Breite der Lichtempfangsebene "w" ist und ein Abstand von einer Reflexionsebene des zu inspizierenden Zieldrahtes (80) zur Lichtempfangsebene "1" ist, ein Lichtbündelungswinkel $\theta$ des reflektierten Lichtes, der auf die flache Lichtempfangsebene jedes Lichtempfangselementes trifft, ausgedrückt ist durch

$$\theta \le 2 \tan^{-1}(\text{w}/2 \cdot \text{l}).$$

2. Drahtoberflächen-Inspektionsvorrichtung (10) gemäß Anspruch 1,
**dadurch gekennzeichnet, dass** der optische Verarbeitungsabschnitt (12a, 12b) das Inspektionslicht durch Bündeln eines Brennpunktes des Inspektionslichtes, das von der Lichtquelle ausgegeben wurde, als schmalen Schlitz formt, so dass dessen kurze Achse in der Längsrichtung des zu inspizierenden Zieldrahtes (80) liegt, und es dann der optische Verarbeitungsabschnitt dem Inspektionslicht gestattet, den zu inspizierenden Zieldraht (80) zu beleuchten.

3. Drahtoberflächen-Inspektionsvorrichtung (10) nach Anspruch 2,
**dadurch gekennzeichnet, dass** der optische Verarbeitungsabschnitt (12a, 12b) eine zylindrische konvexe Linse (13), die den Brennpunkt des Inspektionslichtes in eine Richtung der kurzen Achse bündelt; eine zylindrische konkave Linse (14), die das gebündelte Inspektionslicht in paralleles Licht wandelt; und eine Lichtbündelungslinse (15) umfasst, die den Brennpunkt des Inspektionslichtes, das in paralleles Licht umgewandelt wurde, weiter in die Richtung der kurzen Achse bündelt und es dem Inspektionslicht gestattet, als ein schlitzförmiges Punktlicht den zu inspizierenden Zieldraht (80) zu beleuchten.

4. Drahtoberflächen-Inspektionsvorrichtung (10) nach einem der Ansprüche 1 bis 3,
**dadurch gekennzeichnet, dass** der optische Verarbeitungsabschnitt das Inspektionslicht, das auf den zu inspizierenden Zieldraht (80) fällt, in einer derartige Weise formt, dass eine Länge in der Richtung der langen Achse des Inspektionslichtes zwischen 3 und 6 mm liegt und eine Länge in der Richtung einer kurzen Achse 200 mm oder weniger beträgt.

5. Drahtoberflächen-Inspektionsvorrichtung (10) nach Anspruch 3,
**dadurch gekennzeichnet, dass** eine Fokallänge der Lichtbündelungslinse 100 mm oder mehr beträgt.

6. Drahtoberflächen-Inspektionsvorrichtung (10) nach einem der Ansprüche 1 bis 5,
**dadurch gekennzeichnet, dass** mindestens drei Sätze von Inspektionseinheiten (51-54) angeordnet sind, wobei jeder Satz die Lichtquelle, den optischen Verarbeitungsabschnitt und den Lichtempfangsabschnitt umfasst;

Positionen der Inspektionseinheiten (51-54) in Längsrichtung des zu inspizierenden Zieldrahtes (80) voneinander verschoben sind; Winkel der Inspektionseinheiten mit Bezug auf eine zentrale Achse als die Längsrichtung des zu inspizierenden Zieldrahtes (80) voneinander verschoben sind; und dass eine Kombination der Lichtempfangsabschnitte der Inspektionseinheiten (51-54) sicherstellt, dass ein Umfang des zu inspizierenden Zieldrahtes von sämtlichen Inspektionseinheiten umgeben ist.

7. Drahtoberflächen-Inspektionsvorrichtung (10) nach Anspruch 6,
**dadurch gekennzeichnet, dass** die Drahtoberflächen-Inspektionseinheit, die drei Sätze von Inspektionseinheiten umfasst, und die Inspektionseinheiten so angeordnet sind, dass jeder Winkel bezüglich der zentralen Achse als der Längsrichtung des zu inspizierenden Zieldrahtes (80) um 120° verschoben ist.

8. Drahtoberflächen-Inspektionsvorrichtung (10) nach Anspruch 6,
**dadurch gekennzeichnet, dass** die Drahtoberflächen-Inspektionsvorrichtung, die vier Sätze an Inspektionseinheiten (51-54) umfasst, und die Inspektionseinheiten (51-54) so angeordnet sind, dass jeder Winkel bezüglich der zentralen Achse als der Längsrichtung des zu inspizierenden Zieldrahtes (80) um 90° verschoben ist.

9. Drahtoberflächen-Inspektionsvorrichtung (10) nach Anspruch 6,
**dadurch gekennzeichnet, dass** die Drahtoberflächen-Inspektionsvorrichtung, die sechs Sätze an Inspektionseinheiten (20a-20f) umfasst, und die Inspektionseinheiten (20a-20f) so angeordnet sind, dass jeder Winkel bezüglich der zentralen Achse als der Längsrichtung des zu inspizierenden Zieldrahtes (80) um 60° verschoben ist.

10. Drahtoberflächen-Inspektionsvorrichtung (10) nach einem der Ansprüche 1-9,
**dadurch gekennzeichnet, dass** dem Inspektionslicht das Beleuchten mit einem Einfallswinkel zwischen 20° bis 40° bezüglich des zu inspizierenden Zieldrahtes (80) gestattet ist.

11. Drahtoberflächen-Inspektionsvorrichtung (10) nach Anspruch 10,
**dadurch gekennzeichnet, dass** die Lichtempfangselemente des Lichtempfangsabschnitts in einem Abstand von 10 mm bis 30 mm von dem zu inspizierenden Zieldraht (80) angeordnet sind.

**Revendications**

1. Dispositif d'inspection de la surface d'un fil métallique (10) comprenant:

- une source de lumière (11a, 11b) qui émet une lumière d'inspection (30) éclairant une surface d'un fil cible d'inspection (80);
- une partie de traitement optique (12a, 12b) qui donne une forme à la lumière d'inspection (30) émise par la source de lumière (11a, 11b), puis permet à la lumière d'inspection d'éclairer la surface du fil cible d'inspection (80);

- une partie de réception de lumière (20, 21) qui reçoit la lumière réfléchie par le fil cible d'inspection (80) de la lumière d'inspection (30); et
- une partie de détection de défauts (6) qui exécute un processus de calcul sur des signaux de sortie de la partie de réception de lumière (20, 21) et détecte un défaut de la surface du fil cible d'inspection (80) sur la base du signal de sortie calculé,

**caractérisé en ce que** la partie de traitement optique (12a, 12b) donne à la lumière d'inspection (30) une forme de fente mince (35) ayant un axe long dans une direction de la largeur du fil cible d'inspection (80), un axe court dans une direction longitudinale du fil cible d'inspection (80), une longueur de l'axe long étant supérieure à un diamètre de fil du fil cible d'inspection (80), et une intensité uniforme dans une direction de l'axe long de la lumière d'inspection;

la partie de réception de lumière (20, 21) comporte un ensemble d'éléments de réception de lumière (20a à 20f, 21a à 21f), ayant chacun un plan de réception de lumière plat recevant la lumière réfléchie de la lumière d'inspection, qui sont agencés de manière à entourer au moins la moitié de la circonférence du fil cible d'inspection sans angle mort;

au moins deux ensembles d'unités d'inspection (11a, 12a, 20 ; 11b, 12b, 21), chaque ensemble comportant la source de lumière (11a, 11b), la partie de traitement optique (12a, 12b) et la partie de réception de lumière (20, 21), sont disposés à des positions différentes qui sont situées respectivement dans une forme concentrique afin d'entourer le fil cible d'inspection (80) et décalées les unes par rapport aux autres dans la direction longitudinale du fil cible d'inspection (80);

parmi les éléments de réception de lumière (20a à 20f, 21a à 21f) des ensembles formant la partie de réception de lumière (20,21), une paire d'éléments de réception de lumière, l'un en face de l'autre au travers du fil cible d'inspection, sont disposés de façon à avoir la même distance depuis le centre du fil cible d'inspection (80) jusqu'au plan de réception de lumière de l'élément de réception de lumière, respectivement; et

lorsqu'une largeur du plan de réception de lumière est « w » et qu'une distance depuis un plan de réflexion du fil cible d'inspection (80) jusqu'au plan de réception de lumière est « 1 », un angle de condensation de lumière θ de la lumière réfléchie incidente sur le plan de réception de lumière plat de chacun des éléments de réception de lumière est exprimé par la formule

$$\theta \le 2\tan^{-1}(w/2 \cdot l).$$

2. Dispositif d'inspection de la surface d'un fil métallique (10) selon la revendication 1,
**caractérisé en ce que** la partie de traitement optique (12a, 12b) donne à la lumière d'inspection la forme de fente mince en concentrant un point focal de la lumière d'inspection émise par la source de lumière de telle sorte que l'axe court de celle-ci est dans la direction longitudinale du fil cible d'inspection (80) et ensuite la partie de traitement optique permet à la lumière d'inspection d'éclairer le fil cible d'inspection (80).

3. Dispositif d'inspection de la surface d'un fil métallique (10) selon la revendication 2,
**caractérisé en ce que** la partie de traitement optique (12a, 12b) comprend une lentille cylindrique convexe (13) qui concentre le point focal de la lumière d'inspection dans une direction de l'axe court ; une lentille cylindrique concave (14) qui convertit la lumière d'inspection concentrée en lumière parallèles et une lentille de condensation de lumière (15) qui concentre en outre le point focal de la lumière d'inspection convertie en la lumière parallèle dans la direction de l'axe court et permet à la lumière d'inspection, sous forme de spot de lumière en forme de fente, d'éclairer le fil cible d'inspection (80).

4. Dispositif d'inspection de la surface d'un fil métallique (10) selon l'une quelconque des revendications 1 à 3,
**caractérisé en ce que** la partie de traitement optique donne une forme à la lumière d'inspection incidente sur le fil cible d'inspection (80) de telle sorte qu'une longueur dans la direction de l'axe long de la lumière d'inspection se situe dans une plage comprise entre 3 et 6 mm, et une longueur dans une direction de l'axe court est de 200 μm ou moins.

5. Dispositif d'inspection de la surface d'un fil métallique (10) selon la revendication 3,
**caractérisé en ce qu'**une longueur focale de la lentille de condensation de lumière est de 100 mm ou plus.

6. Dispositif d'inspection de la surface d'un fil métallique (10) selon l'une quelconque des revendications 1 à 5,
**caractérisé en ce qu'**au moins trois ensembles d'unités d'inspection (51 à 54), chaque ensemble comprenant la source de lumière, la partie de traitement optique et la partie de réception de lumière, sont disposés; les positions des unités d'inspection (51 à 54) sont décalées les unes par rapport aux autres dans la direction longitudinale du fil cible d'inspection (80);
les angles des unités d'inspection par rapport à un axe central tel que la direction longitudinale du fil cible d'inspection (80) sont décalés les uns par rapport aux autres; et

une combinaison des parties de réception de lumière des unités d'inspection (51 à 54) fait qu'une circonférence du fil cible d'inspection est entourée par toutes les unités d'inspection.

7. Dispositif d'inspection de la surface d'un fil métallique (10) selon la revendication 6,
**caractérisé en ce que** le dispositif d'inspection de la surface d'un fil métallique comprend trois ensembles des unités d'inspection et les unités d'inspection sont agencées de telle sorte que chaque angle par rapport à l'axe central tel que la direction longitudinale du fil cible d'inspection (80) est décalé de 120°.

8. Dispositif d'inspection de la surface d'un fil métallique (10) selon la revendication 6,
**caractérisé en ce que** le dispositif d'inspection de la surface d'un fil métallique comprend quatre ensembles des unités d'inspection (51 à 54) et les unités d'inspection (51 à 54) sont agencées de telle sorte que chaque angle par rapport à l'axe central tel que la direction longitudinale du fil cible d'inspection (80) est décalé de 90°.

9. Dispositif d'inspection de la surface d'un fil métallique (10) selon la revendication 6,
**caractérisé en ce que** le dispositif d'inspection de la surface d'un fil métallique comprend six ensembles des unités d'inspection (20a à 20f) et les unités d'inspection (20a à 20f) sont agencées de telle sorte que chaque angle par rapport à l'axe central tel que la direction longitudinale du fil cible d'inspection (80) est décalé de 60°.

10. Dispositif d'inspection de la surface d'un fil métallique (10) selon l'une quelconque des revendications 1 à 9,
**caractérisé en ce que** la lumière d'inspection peut éclairer avec un angle d'incidence compris dans une plage allant de 20° à 40° par rapport au fil cible d'inspection (80).

11. Dispositif d'inspection de la surface d'un fil métallique (10) selon la revendication 10,
**caractérisé en ce que** les éléments de réception de lumière de la partie de réception de lumière sont disposés à une distance comprise entre 10 mm et 30 mm du fil cible d'inspection (80).

# FIG. 1

(a)

(b)

FIG. 2

(a)

(b)

FIG. 3

(a)                    (b)

FIG. 4

(a)

(b)

# FIG. 5

(a)                    (b)

FIG. 6

FIG. 7

(a)

DEFECT POSITION ($\beta°$)
(FRONT PLANE OF LASER IS 0°)

(b)

FIG. 8

FIG. 9

(a)

(b)

(c)

FIG. 10

(a)

(b)

# FIG. 11

(a)

(b)

FIG. 12

FIG. 13

(a)

(b)

FIG. 14

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49013688 A
- JP 10068700 A
- JP 9292305 B
- JP 54079693 A